Europäisches Patentamt

European Patent Office

Office européen des brevets

(11) Publication number: **0 112 016**
**B1**

# EUROPEAN PATENT SPECIFICATION

(45) Date of publication of patent specification: **29.07.87**

(21) Application number: **83306718.4**

(22) Date of filing: **04.11.83**

(51) Int. Cl.⁴: **H 04 N 1/10**

(54) **Improvements in and relating to document scanners.**

(30) Priority: **05.11.82 GB 8231676**

(43) Date of publication of application:
**27.06.84 Bulletin 84/26**

(45) Publication of the grant of the patent:
**29.07.87 Bulletin 87/31**

(84) Designated Contracting States:
**AT BE CH DE FR IT LI LU NL SE**

(56) References cited:
**DE-A-2 737 335**
**FR-A- 647 927**
**US-A-3 867 569**
**US-A-4 275 423**

**PATENT'S ABSTRACTS OF JAPAN, vol.5,
no.103 (E-64) (775) July 3, 1981**

**PHILIPS TECHNICAL REVIEW, vol.39, no.12,
1980, EINDHOVEN (NL); J.A. DE VOS:**

(73) Proprietor: **The British Library Board
Great Russell Street
London WC1 3DG (GB)**

(72) Inventor: **Wilman, Hugh
76 Mount Grace Road
Potters Bar Herts EN6 1QZ (GB)**
Inventor: **Brotton, James
1 Moss Drive
Haslingfield Cambridge (GB)**

(74) Representative: **Nash, Keith Wilfrid et al
KEITH W. NASH & Co. Pearl Assurance House
90-92 Regent Street
Cambridge CB2 1DP (GB)**

(56) References cited:
**"Megadoc, a modular system for electronic
document handling" pages 329-343**

**PRODUCT ENGINEERING, vol.35, no.20, 28
September 1964, NEW YORK (US); "A ball-
point printing system"**

Courier Press, Leamington Spa, England.

EP 0 112 016 B1

## Description

Field of Invention

This invention concerns scanners for converting an image of a document into an electrical video signal which may be digitized for storage such as on a magnetic medium, and on replay can be made to assemble a display on a television screen or the like corresponding to the original dicument, or may be employed as an input signal to a printer/plotter.

In this specification the term document is intended to mean any generally flat surface bearing information and includes a page of a book, a sheet of film or picture, map, drawing and the like.

Background to the Invention

Conversion of information contained on a document into an electrical signal can be achieved in a number of ways.

In one arrangement relative movement is effected between a spot of light and an information bearing surface and reflected light from the spot is focussed onto a photocell. As the spot moves over the surface so the reflected light level varies in relation to the information content and a varying electrical signal derived from the photocell comprises the electrical video signal.

In another arrangement an electron beam is scanned over a photoconductive surface onto which an image of the surface is focussed. The electron beam current varies with the light level at different points of the photoconductive surface and an electrical signal derived from these current variations comprises the said electrical video signal.

US—A—4275423 discloses a small document scanner in which a scanner head is mounted in a housing for movement past a window in the housing. The scanner also has a document support and the housing and the document support are hinged to each other. In use, the scanner is closed up like a book with the housing window overlying the document on the document support. The housing and the document support are rotated apart about the hinges to lie in transverse planes to open up the scanner so that a document may be placed on and removed from the document support. The housing and the document support may also be slidable away from each other to accommodate relatively thick documents between them.

The scanner head in US—A—4275423 has a light source to illuminate a strip of the document through the window, a mirror to reflect light from the document into a plane parallel to the window, a lens to focus the reflected light, and a detector. These parts are all in a common plane close to the window, so that the scanner head is thin but has considerable extent in the direction from the mirror to the detector, which is also the direction of scanning movement. The detector may be a CCD element. Alternatively, if a fibre is used in place of the lens the detector may be one or more rows of CCD elements. It is not disclosed how the CCD element signal is read out. There is no suggestion that the scanner could be operated when the document support and the housing are not closed up against each other.

Summary of the Invention

According to the present invention, there is provided a document scanner in which an image of an illuminated information bearing document is formed by a lens and brought to focus in a plane containing a narrow line of photoelectric elements into which the image falls, which elements produce in use an electrical signal a parameter of which varies in sympathy with the incident light level on the individual elements of the line, the scanner comprising:

a primary support for a document to be scanned;

a housing which is pivotally mounted for movement between first and second angular positions and which has a window against which a document may be supported by the document support when the housing is in the said first angular position; and

a scanner head in the housing which scanner head has the said narrow line of photoelectric elements, the said lens and a primary light source adjacent the window in the housing for illuminating an elemental line of a document positioned against the window, the scanner head being movable in the housing when the housing is in the said first angular position to cause the primary light source and the line of photoelectric elements to traverse in one coordinate direction a document positioned against the window,

characterised in that the scanner further comprises a housing support on which the housing is mounted for the said pivotal movement,

in the first said angular position the housing is movable relative to the document support towards it to position a supported document against the window and away from it to allow a document to be removed from or placed on the document support,

the line of photoelectric elements is remote from the window in the housing and in the said traversing the light source and the photoelectric elements move in parallel spaced apart planes,

the said electrical signal is produced by addressing the photoelectric elements in sequence in a second coordinate direction, and

the scanner head is also operable when the housing is in the second angular position, to scan the image plane of a document image projected into the housing through the window.

Conveniently means is included for changing the direction of sequential address of the elements in the said line of photoelectric elements, to allow the scanning direction relative to a book to always be in the same sense even when the book has been turned through 180°.

Typically the photoconductive elements are miniature charge coupled devices.

The lens and line of elements can be thought of as being a line detector equivalent to a camera having a slit-like field of view, which is mounted so that the length dimension of the slit is parallel to one edge of the window and scanning is achieved by moving the detector within the housing so that the slit-like field of view is moved across the window, always parallel to the said one edge thereof whilst all the time a sequential sampling of the light is performed at points along the length of the detector so as to produce an electrical video signal.

Preferably means is provided for altering the focussing of the lens and/or the depth of focus thereof.

Preferably an elongate lamp is employed as the said light source and is positioned parallel to the slit-like field of view of the photoelectric elements but just off axis so as not to be "seen" by the scanner.

In a preferred embodiment the lamp is carried on a frame which itself extends from and is rigidly attached to or forms part of a movable mounting carrying the photoelectric elements.

The scanner conveniently has circuit means for powering the line of photoelectric elements (as required) and converting an electrical signal obtained from them into an electric video signal.

Preferably means is provided for converting the video signal into a digital signal suitable for storage in a digital computer store.

Preferably the housing can be pivoted into a range of positions to accommodate different documents and/or image forming optical systems.

The invention will now be described by way of example with reference to the accompanying drawings, in which:

Figure 1 is a side elevation from the front of a document scanner constructed in accordance with the invention,

Figure 2 is a plan view of part of the scanner housing of Figure 1,

Figure 3 is an end elevation of the unit shown in Figure 1,

Figure 4 is a perspective view of this embodiment of the invention, and

Figure 5 illustrates how the scanner or Figures 1 to 4 can be modified to receive light images from different types of documents and from film.

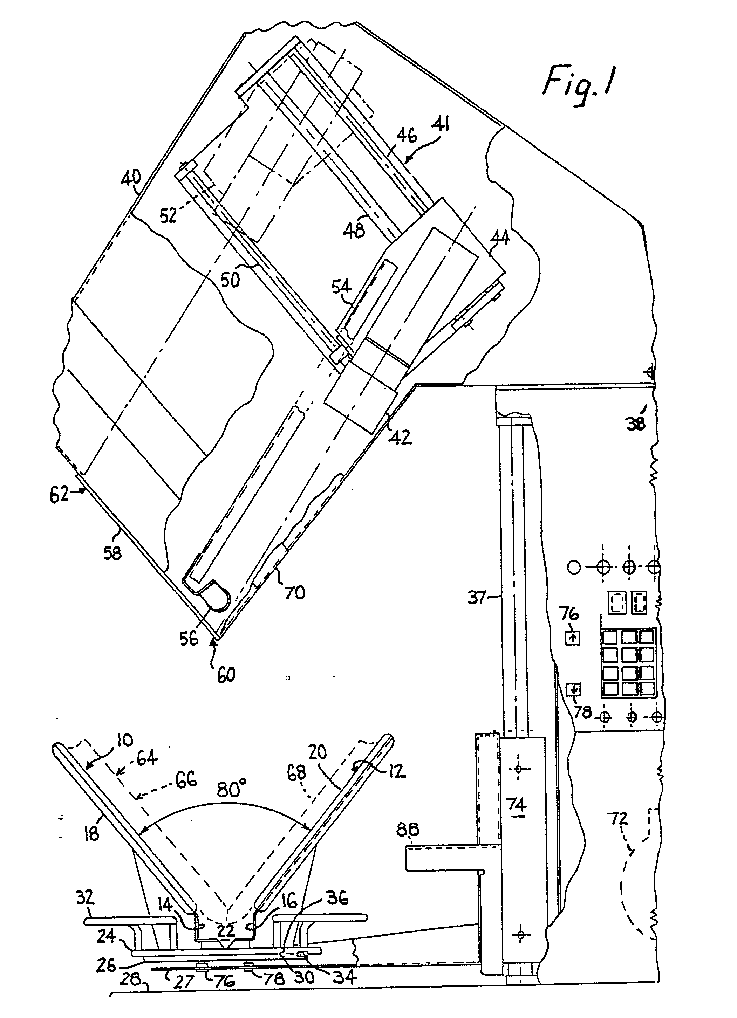

Figure 1 illustrates in side elevation a complete document scanner unit which includes a book support which is the subject of a copending application. The support comprises a pair of diverging plates generally designated 10 and 12 each comprising a metal inner member 14 and 16 and an outer coating of plastics material 18 and 20 respectively.

The two metal struts 14 and 16 are joined in a channel arrangement at 22 which itself is attached to an upper ring 24 of a bearing assembly having a lower ring 26 which is secured to a lifting base 27 (to be described in more detail hereinafter) mounted on a lower final base 28.

A ball-race 30 allows for rotation of the upper ring 24 relative to the lower ring 26 and a hand grip 32 extends around the upper ring to allow for manual rotation of the ring and support assembly.

A springloaded ball 34 and depressions such as 36 in the underside of the upper ring 24 provide stops to define at least two preferred angular positions separated by 180 of rotation of the ring 24. The base 28 serves as a support for a column 37 and associated housing 38 which houses controls and drives as required. At the upper end the column provides a support for a housing 40 within which is located a detector 42 such as a Fairchild camera type CCD 1500. The latter is mounted rigidly on a platform 44 the underside of which slidably engages a guide rail 46 and includes a driving collar threadedly engaged on a screw-threaded rod 48. Rotation of the collar produces lateral movement of the platform 44 parallel to the guide rail 46.

A further guide rail at 50 prevents any torsional movement of the platform.

A drive means (not shown) such as an electric motor is provided on the underside of the platform to drive the latter from one end of its traverse to the other.

The position of the platform 44 at the opposite end of its traverse is shown in dotted outline at 52.

Protruding from the platform is an arm 54 which is shown broken in order to reduce hidden detail to the minimum. The lower end of the arm 54 carries a strip light 56 and electrical connection to the strip light is achieved through a flexible cable (not shown).

As the platform 44 moves along its rails, so the light 56 travels by the same lateral distance.

The light 56 is positioned just behind a window 58 in the lower end of the housing 40 and the camera/detector 42 views a narrow strip which extends perpendicular to the direction of travel of the platform 44. With movement of the platform 44 from one end to the other of the rails 46 and 50, the viewing strip moves laterally from the end 60 to the end 62 of the window 58 and in the reverse direction back again from 62 to 60.

The camera/detector comprises a linear array of photoconductive junctions and an appropriate lens (all not shown) so that a document positioned just to the left-hand side of the window shown in Figure 1 will be in focus in a plane containing the line of photoconductive junctions. A document surface bearing against the underside of the window 58 will thus be brought to focus on the linear array of photoconductive junctions.

An electrical scanning circuit scans the junctions in succession so as to produce a series of electrical pulses corresponding to the illumination falling on the junctions along the linear array. By synchronising the movement of the detector 42 and the rate of movement along the rails 46 and 50, the output signal will approximate to a video signal similar to that obtained by rectilinear line scanning.

A book is shown in dotted outline at 64, opened and resting on the two inclined diverging supports 10 and 12. The upwardly facing surface of the left-hand open page 66 will be viewed by the scanner 42 through the window 58 and a video signal of the page concerned can be obtained by scanning in the manner previously described.

By rotating the platform ring 24 through 180°, the opposite facing page 68 will be presented to the window 58 and can be scanned and converted into a video signal in a similar manner.

In order to present the appropriate page of the book to the window 58, the support assembly carried by the lifting platform 27 can be elevated until the pages of the book are in contact with the window 58 and the underside of the housing 70. To this end an electric motor drive shown in dotted outline at 72 is provided in the housing 38 and the lifting platform 27 is attached to a sleeve 74 carried by the column 37 which is driveable up and down the column by means of the electric motor 72 typically via the gearbox and clutch mechanism.

Up and down controls at 76 and 78 respectively are provided for appropriate rotation of the electric motor 72.

A stop mechanism is provided which detects when the book is just below the housing 40 with the book still out of contact with the window 58 and underside 70 of the housing 40. At this position the motor 72 is stopped automatically and a form of manual control is provided to allow the book to be offered up into contact with the housing 40 under hand control. Although not shown, some form of ratchet or clutch mechanism is provided which allows the assembly carried by the lifting platform 27 to be moved in an upward direction without fall-back occurring and a de-clutching device (again not shown) is provided to allow the platform to be moved in a downward direction after the page 64 has been scanned.

Although not shown, stop means is provided at the bottom of the travel to arrest the movement of the motor and downward movement of the sleeve 74 before bottoming.

In order to provide for a degree of shock absorbing, the ring 26 may be carried by rubber bushes at 76 and 78.

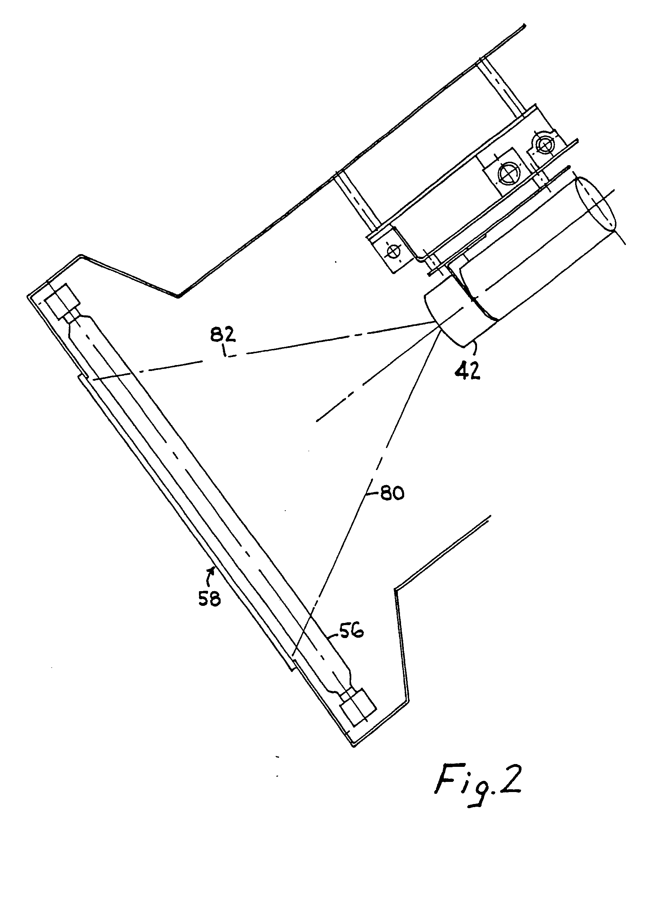

Figure 2 is a cross-section through the housing 40 viewed from above and shows the window 58 in relation to the elongate fluorescent tube 56 previously shown in Figure 1. In addition the field of view of the detector 42 is demonstrated by the diverging lines 80 and 82. To this end the divergence is intended to accommodate the full height of the window 58 and the lateral movement of the scanner 42 is intended to cover the perpendicular dimension of the window 58.

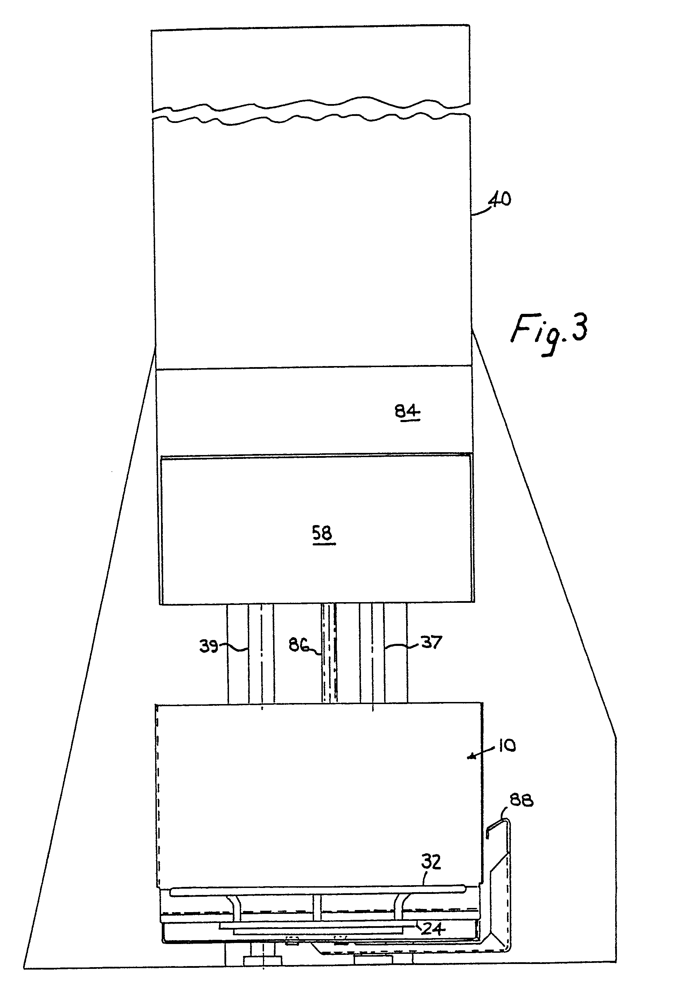

Figure 3 which is an end elevation of the equipment shown in Figure 1, illustrates the extent of the window 58 in the lower inclined face 84 of the housing 40.

The left-hand side of the book support 10 can clearly be seen in Figure 3 as also can the handwheel section 32 attached to the upper ring.

As is more clearly seen in Figure 3, the column 37 is one of a pair the other being denoted by reference numeral 39 and drive to the lifting platform 27 is achieved through rotating screw 86 located between and parallel to the two columns of 37 and 39.

By using two columns any tendency of the book support assembly to twist about the axis of the screw threaded drive 86 will be prevented.

Figure 3 also shows the handle 88 (also shown in Figure 1) which extends laterally from the sleeve 74 and can be used by the operator to raise and lower the support manually during the last part of the travel.

Although not shown a modified document scanner may be constructed from components such as are shown in Figures 1 to 3 but excluding the lamp 56. In such a modified scanner light from a document which may be a transparent film such as a microfiche, is directed through the window 58 and focussed using the aforementioned lens or additional lens means (not shown) onto the linear array of photoconductive junctions (not shown). Scanning and production of the video signal as then performed is beforementioned.

The second housing containing the detector may itself be hinged so as to allow it to be pivoted into a range of positions to accommodate different documents and/or image forming optical systems.

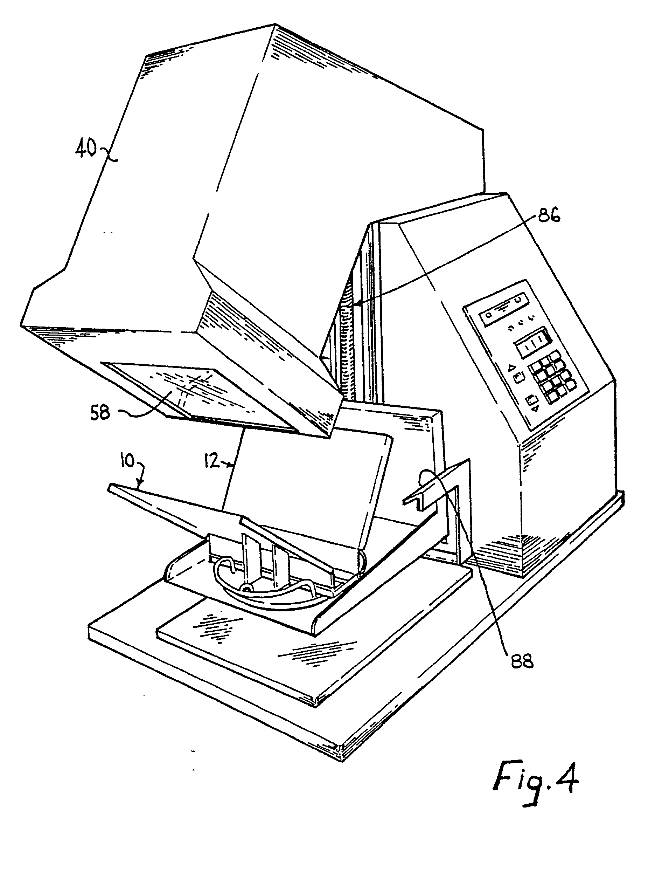

In Figure 4 the same reference numerals as have been employed in Figures 1 to 3 are used to denote similar items.

In order to provide for a degree of self centering of a book about the lower edge 60, the support trough 10, 12 is movable freely in the direction of the arm 29 relative to the platform support 27.

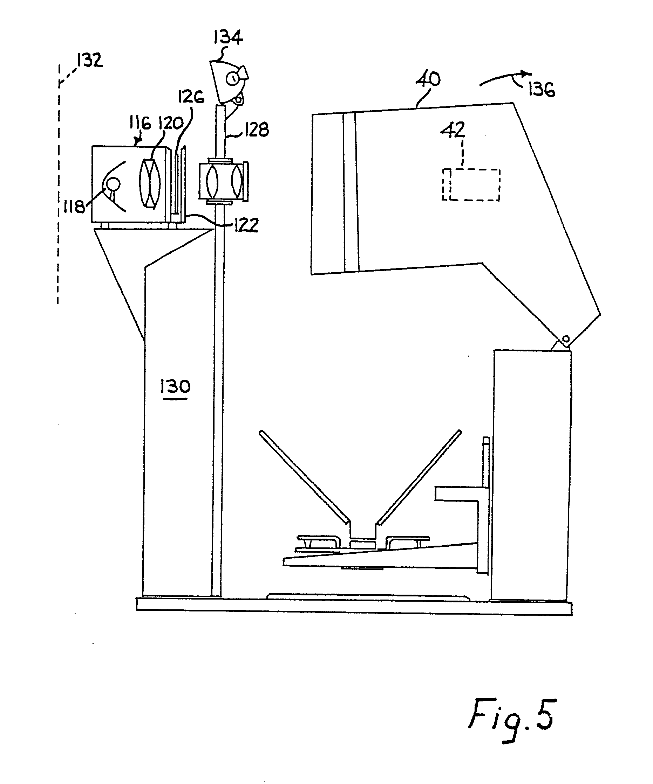

In Figure 5 the housing 40 is shown tilted to a horizontal position and a projection device 116 is shown mounted adjacent to or on the housing 40 comprising a lamp 118, a condensor 120 and film holder 122 for transparencies or microfiche or the like.

A focussing lens 124 is adjustable to form an in focus image of the film or other device 126 on the line of photosensitive elements (not shown) in the camera tube or scanner 42.

The projection device 116 may be removed to leave only the lens 124 and its relative supports 128 and 130 to enable, with an appropriate focal length lens, a large document such as a picture or map shown dotted at 132 to be focussed onto the camera 42.

A lamp 134 may be mounted on the support 130 to illuminate a document such as at 132.

Although not shown the housing 40 may be rotated further in the direction of arrow 136 until the window 58 faces upwards and is substantially horizontal to allow for imaging from above.

Attention is drawn to our co-pending applications having publication numbers EP 109237, EP 108623 and EP 108625, which are directed to some of the subject matter disclosed herein.

## Claims

1. A document scanner in which an image of an illuminated information bearing document is formed by a lens and brought to focus in a plane containing a narrow line of photoelectric elements into which the image falls, which elements produce in use an electrical signal a parameter of which varies in sympathy with the incident light level on the individual elements of the line, the scanner comprising:

a primary support (10, 12) for a document to be scanned;

a housing (40) which is pivotally mounted for movement between first and second angular positions and which has a window (58) against which a document may be supported by the document support (10, 12) when the housing is in the said first angular position;

a scanner head (42, 44, 54, 56) in the housing which scanner head has the said narrow line of photoelectric elements, the said lens and a primary light source (56) adjacent the window (58) in the housing (40) for illuminating an elemental line of a document positioned against the window, the scanner head being movable in the housing when the housing is in the said first angular position to cause the primary light source and the line of photoelectric elements to traverse in one coordinate direction a document positioned against the window,

characterised in that the scanner further comprises a housing support (37, 38) on which the housing is mounted for the said pivotal movement,

in the said first angular position the housing (40) is movable relative to the document support (10, 12) towards it to position a supported document against the window (58) and away from it to allow a document to be removed from or placed on the document support (10, 12),

the line of photoelectric elements is remote from the window (58) in the housing and in the said traversing the light source (56) and the photoelectric elements move in parallel spaced apart planes,

the said electrical signal is produced by addressing the photoelectric elements in sequence in a second coordinate direction, and

the scanner head is also operable when the housing is in the second angular position, to scan the image plane of a document image projected into the housing through the window (58).

2. A document scanner as claimed in claim 1 wherein means is included for changing the direction of sequential address of the photoelectric elements in the said line of elements, to allow the scanning direction relative to a document to always be in the same sense even when the document has been turned through 180°.

3. A document scanner as claimed in claim 1 or claim 2 in which the photoconductive elements are miniature charge coupled devices.

4. A document scanner as claimed in any of claims 1 to 3 in which means is provided for altering the focus and/or the depth of focus of the lens.

5. A document scanner as claimed in any of the preceding claims wherein an elongate lamp is employed as the said light source and is positioned parallel to the slit-like field of view of the photoelectric elements but just off axis so as not to be "seen" by them.

6. A document scanner as claimed in claim 5 wherein the lamp is carried on a frame which itself extends from and is rigidly attached to or forms part of a movable mounting carrying the photoelectric elements.

7. A document scanner as claimed in any one of the preceding claims having circuit means for powering the line pf photoelectric elements and converting an electrical signal obtained from them into an electrical video signal.

8. A document scanner as claimed in claim 7 wherein means is provided for converting the video signal into a digital signal suitable for storage in a digital computer store.

9. A document scanner as claimed in any one of the preceding claims in which the housing can be rotated to more than two angular positions, in each of which the said scanner head is operable.

10. A method of scanning a document image in which the housing of a scanner as claimed in any one of the preceding claims is placed in its second angular position and the document image is projected through the window in the housing.

## Patentansprüche

1. Ein Dokumentenabtaster, bei dem ein Bild eines beleuchteten, eine Information enthaltenden Dokumentes durch ein Objektiv gebildet und in einer eine schmale Reihe von fotoelektrischen Elementen enthaltenden Ebene, in die das Bild fällt, scharf abgebildet wird, welche Elemente im Betrieb ein elektrisches Signal erzeugen, von dem ein Parameter nach Maßgabe des auf die einzelnen Elemente der Reihe fallenden Lichtpegels veränderlich ist, wobei der Abtaster folgende Merkmale aufweist:

eine Hauptstütze (10, 12) für ein abzutastendes Dokument;

ein Gehäuse (40), das zwecks Bewegung zwischen einer ersten und einer zweiten Winkelstellung schwenkbar befestigt ist und ein Fenster (58) aufweist, an dem ein Dokument bei sich in der ersten Winkelstellung befindendem Gehäuse durch die Dokumentenstütze (10, 12) gehalten werden kann;

einen Abtastkopf (42, 44, 54, 56) in dem Gehäuse, wobei der Abtastkopf die schmale Reihe der fotoelektrischen Elemente aufweist, das Objektiv und eine Hauptlichtquelle (56) neben dem Fenster (58) in dem Gehäuse (40) zum Ausleuchten einer elementaren Reihe eines an das Fenster anglegten Dokumentes, wobei der Abtastkopf in dem Gehäuse bei sich in der ersten Winkelstellung befindendem Gehäuse verschiebbar ist, damit die Hauptlichtquelle und die Reihe der fotoelektrischen Elemente ein an das Fenster angelegtes Dokument in einer Koordinatenrichtung überqueren,

dadurch gekennzeichnet, daß

der Abtaster weiter eine Gehäusestütze (37, 38) aufweist, auf der das Gehäuse zum Durchführen dieser Schwenkbewegung befestigt ist,

das Gehäuse (40) in der ersten Winkelstellung gegenüber der Dokumentenstütze (10, 12) in Richtung auf diese verschiebbar ist, um ein abgestütztes Dokument an das Fenster (58) anzulegen und von diesem wegzubewegen, damit ein Dokument von der Dokumentenstütze (10, 12) abgenommen oder auf diese aufgelegt werden kann,

die Reihe der fotoelektrischen Elemente vom Fenster (58) im Gehäuse abgelegen ist und die Lichtquelle (56) und die fotoelektrischen Elemente sich bei der Querbewegung in parallelen, auseinanderliegenden Ebenen bewegen,

das elektrische Signal durch sequentielles Adressieren der fotoelektrischen Elemente in einer zweiten Koordinatenrichtung erzeugt wird, und

der Abtastkopf auch bei sich in der zweiten Winkelstellung befindendem Gehäuse betriebsfähig ist, um die Bildebene eines durch das Fenster (58) in das Gehäuse projizierten Dokumentenbildes abzutasten.

2. Ein Dokumentenabtaster wie in Anspruch 1 beansprucht, wobei ein Mittel zum Ändern der Richtung des sequentiellen Adressierens der fotoelektrischen Elemente in der Elementenreihe enthalten ist, damit die Abtastrichtung gegenüber einem Dokument selbst bei einem Drehen des Dokumentes um 180° immer im gleichen Sinne erfolgt.

3. Ein Dokumentenabtaster wie in Anspruch 1 oder Anspruch 2 beansprucht, wobei die fotoleitenden Elemente sehr kleine ladungsgekoppelte Vorrichtungen sind.

4. Ein Dokumentenabtaster wie in irgendeinem der Ansprüche 1 bis 3 beansprucht, wobei ein Mittel zum Ändern der Scharfeinstellung und/oder der Tiefenschärfe des Objektivs vorgesehen ist.

5. Ein Dokumentenabtaster wie in irgendeinem der vorhergehenden Ansprüche beansprucht, wobei eine langgestreckte Lampe als die Lichtquelle verwendet und parallel zu dem schlitzartigen Blickfeld der fotoelektrischen Elemente, aber gerade weg von deren Achse angeordnet ist, so daß sie von ihnen nicht "gesehen" wird.

6. Ein Dokumentenabtaster wie in Anspruch 5 beansprucht, wobei die Lampe auf einem Rahmen getragen wird, der selbst von einer die fotoelektrischen Elemente tragenden verschiebbaren Halterung ausgeht und starr mit dieser verbunden ist oder einen Teil von dieser bildet.

7. Ein Dokumentenabtaster wie in irgendeinem der vorhergehenden Ansprüche beansprucht, mit einem Schaltungsmittel zum Speisen der Reihe der fotoelektrischen Elemente und zum Umwandeln eines von ihnen erhaltenen elektrischen Signales in ein elektrisches Videosignal.

8. Ein Dokumentenabtaster wie in Anspruch 7 beansprucht, wobei ein Mittel vorgesehen ist zum Umwandeln des Videosignales in ein zum Speichern in einem digitalen Computerspeicher geeignetes digitales Signal.

9. Ein Dokumentenabtaster wie in irgendeinem der vorhergehenden Ansprüche beansprucht, in dem das Gehäuse in mehr als zwei Winkelstellungen gedreht werden kann, wobei der Abtastkopf in jeder von diesen betriebsfähig ist.

10. Ein Verfahren zum Abtasten eines Dokumentenbildes, wobei das Gehäuse eines Abtasters, wie es in irgendeinem der vorhergehenden Ansprüche beansprucht wird, in seine zweite Winkelstellung gesetzt und das Dokumentenbild durch das Fenster in dem Gehäuse projiziert wird.

**Revendications**

1. Un analyseur de documents dans lequel une image d'un document porteur d'information éclairé est formée par une lentille et est mise point dans un plan contenant une ligne étroite d'éléments photoélectriques sur lesquels l'image est projetée, ces éléments produisant pendant l'utilisation un signal électrique dont paramètre varie en correspondance avec le niveau de lumière que reçoivent les éléments individuels de la ligne, l'analyseur comprenant:

un support principal (10, 12) pour un document à analyser;

un boîtier (40) qui est monté de façon pivotante pour accomplir un mouvement entre des première et seconde positions angulaires et qui comporte une fenêtre (58) contre laquelle un document peut être supporté par le support de document (10, 12) lorsque le boîtier est dans la première position angulaire;

une tête d'analyseur (42, 44, 54, 56) logée dans le boîtier, cette tête d'analyseur comportant ladite ligne étroite d'éléments photoélectriques, ladite lentille et une source lumineuse principale (56) adjacente à la fenêtre (58) dans le boîtier (40), destinée à éclairer une ligne élémentaire d'un document placé contre la fenêtre, la tête d'analyseur pouvant être déplacée dans le boîtier lorsque ce dernier est dans la première position angulaire, pour faire en sorte que la source lumineuse principale et la ligne d'éléments photoélectriques balaient dans une direction de coordonnées un document placé contre la fenêtre,

caractérisé en ce que l'analyseur comprend en outre un support de boîtier (37, 38) sur lequel le boîtier est monté pour pouvoir effectuer le mouvement pivotant,

dans la première position angulaire, le boîtier (40) est mobile par rapport au support de document (10, 12) de façon à s'en approcher pour positionner contre la fenêtre (58) un document supporté, et à s'en éloigner pour permettre de retirer un document du support de document (10, 12) ou de placer un document sur ce dernier,

la ligne d'éléments photoélectriques est distante de la fenêtre (58) dans le boîtier, et pendant le balayage précité, la source lumineuse (56) et les éléments photoélectriques se déplacent dans des plans parallèles écartés,

le signal électrique est produit par l'adressage séquentiel des éléments photoélectriques dans une seconde direction de coordonnées, et

on peut également faire fonctionner la tête d'analyseur lorsque le boîtier est dans la seconde position angulaire, pour analyser le plan image d'une image d'un document qui est projetée dans le boîtier à travers la fenêtre (58).

2. Un analyseur de documents selon la revendication 1, dans lequel il existe des moyens destinés à changer la direction de l'adressage séquentiel des éléments photoélectriques dans la ligne d'éléments, pour que le sens d'analyse d'un document soit toujours le même, même lorsque le document a été retourné de 180°.

3. Un analyseur de documents selon la revendication 1 ou la revendication 2, dans lequel les éléments photoconducteurs sont des dispositifs à couplage de charge miniatures.

4. Un analyseur de documents selon l'une quelconque des revendications 1 à 3, dans lequel il existe des moyens destinés à modifier la position du foyer et/ou la profondeur de champ de la lentille.

5. Un analyseur de documents selon l'une quelconque des revendications précédentes, dans lequel on utilise une lampe allongée pour la source lumineuse, et cette lampe est placée parallèlement au champ en forme de fente des éléments photoélectriques, mais elle est légèrement décalée par rapport à l'axe, de façon à ne pas être "vue" par ces éléments.

6. Un analyseur de documents selon la revendication 5, dans lequel la lampe est supportée par un châssis qui s'étend lui-même à partir d'une monture mobile supportant les éléments photoélectriques, et ce châssis est fixé rigidement à la monture ou fait partie de celle-ci.

7. Un analyseur de documents selon l'une quelconque des revendications précédentes, comportant des circuits destinés à alimenter la ligne d'éléments photoélectriques et à convertir un signal électrique obtenu à partir de ces éléments, pour donner un signal vidéo électrique.

8. Un analyseur de documents selon la revendication 7, dans lequel il existe des moyens destinés à convertir le signal vidéo en un signal numérique convenant pour l'enregistrement dans une mémoire d'ordinateur.

9. Un analyseur de documents selon l'une quelconque des revendications précédentes, dans lequel on peut faire tourner le boîtier pour l'amener dans plus de deux positions angulaires dans chacune desquelles on peut faire fonctionner la tête d'analyseur.

10. Un procédé pour analyser une image d'un document dans lequel le boîtier d'un analyseur selon l'une quelconque des revendications précédentes est placé dans sa seconde position angulaire, et l'image du document est projetée dans le boîtier à travers la fenêtre.

Fig.1

Fig.2

Fig.3

Fig.4

4

Fig.5